(19) Europäisches Patentamt
European Patent Office
Office européen des brevets

(11) **EP 3 334 969 B1**

(12) **EUROPEAN PATENT SPECIFICATION**

(45) Date of publication and mention
of the grant of the patent:
**09.02.2022  Bulletin 2022/06**

(21) Application number: **16834696.3**

(22) Date of filing: **08.08.2016**

(51) International Patent Classification (IPC):
**F16L 53/37** (2018.01)  **F16L 11/08** (2006.01)
**F16L 59/153** (2006.01)

(52) Cooperative Patent Classification (CPC):
**F16L 11/083; F16L 53/37; F16L 59/153**

(86) International application number:
**PCT/DK2016/050264**

(87) International publication number:
**WO 2017/025098 (16.02.2017 Gazette 2017/07)**

(54) **AN UNBONDED FLEXIBLE PIPE**

UNVERBUNDENES FLEXIBLES ROHR

TUYAU FLEXIBLE NON COLLÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **10.08.2015  DK 201570515**

(43) Date of publication of application:
**20.06.2018  Bulletin 2018/25**

(73) Proprietor: **National Oilwell Varco Denmark I/S
2605 Brøndby (DK)**

(72) Inventors:
• **GLEJBØL, Kristian
2600 Glostrup (DK)**
• **STRAARUP, Anders
2500 Valby (DK)**

(74) Representative: **Plougmann Vingtoft a/s
Strandvejen 70
2900 Hellerup (DK)**

(56) References cited:
EP-A1- 2 493 262    WO-A1-2007/144552
WO-A1-2011/050810    WO-A1-2013/044920
WO-A1-2014/174244    WO-A1-2015/014365
WO-A1-2015/014365    WO-A1-2016/062319
WO-A2-2012/172305    WO-A2-2013/155389
US-A- 3 629 551    US-A- 3 983 360
US-A- 4 142 093    US-A- 5 289 561
US-A1- 2003 070 719    US-B1- 6 509 557

**Description**

The present invention relates to an unbonded flexible pipe having a length and a longitudinal axis and comprising from, the inside and out, a carcass, an internal pressure sheath, at least one external amour layer, and an outer sheath, the carcass comprises at least one elongate armour element helically wound to surround the center axis with a winding degree to the longitudinal axis.

TECHNICAL FIELD

Unbonded flexible pipes are frequently used as flexible risers or flexible flowlines for the transport of fluids including hydrocarbons such as oil and gas.

Moreover, unbonded flexible pipes are often used e.g. as riser pipes or flowlines in the production of oil or other subsea applications.

The unbonded flexible pipes are constructed of a number of independent layers, such as helically laid steel and polymeric layers formed around a central bore for transporting fluids. A typical unbonded flexible pipe comprises, from the inside and outwards, an inner armouring layer known as the carcass, an internal pressure sheath surrounded by one or more armouring layers, such as pressure armouring and tensile armouring, and an outer sheath. Thus, the carcass and the internal pressure sheath form a bore in which the fluid to be transported is conveyed. In some unbonded flexible pipes, the carcass may be omitted and the internal pressure sheath forms the bore. When the carcass is omitted, the bore is denoted a smooth bore. When the carcass is present, the bore is denoted a rough bore. The annular space between the internal pressure sheath and the outer sheath is known as the annulus and houses the pressure armouring and the tensile armouring.

The unbonded flexible pipes may carry the fluids between a hydrocarbon reservoir located under the sea bed and a floating structure. The fluid may be a hydrocarbon fluid, such as natural gas or oil, depending upon the nature of the hydrocarbon reservoir, or an injection fluid such as water. The fluids, which are transported to the floating structure, can be processed, for example by compression and/or further treatment. When the floating structure is moored close to a gas field or hydrocarbon reservoir, it can be kept in fluid communication with the producing well heads via one or more flexible risers. The one or more flexible risers can convey fluids between the well heads of a hydrocarbon reservoir and the floating structure. Flexible risers may be configured as free-hanging catenaries or provided in alternative configurations, such as lazy wave and lazy S types, using buoyancy modules. Thus, a flexible riser can be connected at one end to the floating structure, and at another end to a riser base manifold, which can secure the flexible riser to the sea bed.

When the hydrocarbon enters the floating structure it is common to treat the hydrocarbon and prepare it for use in processes, such as cracking, refining, etc. Examples of floating structures, which have such capacities, are vessels like FPSO's (floating production and storage offloading).

In recent years it has also become common to equip the flexible unbonded pipes with heating systems, such as electric heating. The electric heating system may utilize the metallic armour layers in the unbonded flexible pipe.

The armouring layers comprise or consist of multiple elongated armouring elements that are not bonded to each other directly or indirectly via other layers along the pipe. Thereby the pipe becomes bendable and sufficiently flexible to roll up for transportation. The armouring elements are very often manufactured from metallic and electrically conductive material.

Flexible unbonded pipes of the present type are for example described in the standard "Recommended Practice for Flexible Pipe", ANSI/API 17 B, fourth Edition, July 2008, and the standard "Specification for Unbonded Flexible Pipe", ANSI/API 17J, Third edition, July 2008. As mentioned such pipes usually comprise an innermost sealing sheath - often referred to as an internal pressure sheath, which forms a barrier against the outflow of the fluid which is conveyed in the bore of the pipe, and one or usually a plurality of armouring layers. Normally the pipe further comprises an outer protection layer, often referred to as the outer sheath, which provides mechanical protection of the armour layers. The outer protection layer may be a sealing layer sealing against ingress of sea water. In certain unbonded flexible pipes one or more intermediate sealing layers are arranged between armour layers. In general flexible pipes are expected to have a lifetime of 20 years in operation.

The term "unbonded" means in this text that at least two of the layers including the armouring layers and polymer layers are not bonded to each other. In practice the known pipe normally comprises at least two armouring layers located outside the internal pressure sheath and optionally an armour structure located inside the internal pressure sheath, which inner armour structure normally is referred to as the carcass.

In recent years some flexible unbonded pipes have been equipped with heating systems, such as electric heating, in particular unbonded flexible pipes for use in cold environment. The electric heating system may utilize the metallic armour layers in the unbonded flexible pipe.

When an unbonded flexible pipe comprises an electric heating system, the carcass may be utilized as a heating element. This is done by sending an electric current through the metallic material of the carcass, whereby the electrical resistance of the metallic material will cause a part of the electric energy to be transformed into heat, which will heat the pipe. WO2015/014365 describes an unbonded flexible pipe with a first and a second end fitting and electrical connections in the first end fitting for applying a voltage over electrically conductive layers of the pipe. The unbonded flexible pipe of WO2015/014365 comprises from inside and out an electrically conductive carcass, an electrically insulating innermost sealing sheath, at least one electrically conductive armor layer comprising at least one helically wound electrically conductive wire and an electrically insulating outer sealing sheath.

DISCLOSURE OF INVENTION

An object of the present invention is to provide an unbonded flexible pipe with improved utility. Moreover, the present invention provides an unbonded flexible pipe in which the properties of the carcass may vary throughout the length of the pipe.

Consequently, the present invention relates to an unbonded flexible pipe as defined in claim 1.

Thus, the carcass is manufactured from an elongate armour element which is electrically conductive. The carcass in the unbonded flexible pipe is wound up from the elongate armour element such as a metal strip. The elongate armour element is wound up to form a tube, which becomes the carcass. The carcass is located in the bore of the pipe and supports the internal pressure sheath. The winding degree of the elongate armour element to the longitudinal axis is typically between 85° and 89.8°. The longitudinal axis also defines the center axis of the unbonded flexible pipe, and longitudinal axis and center axis may be used interchangeably.

The elongate armour element is electrically conductive and will have a specific electrical resistivity of about $10^{-6}$ $\Omega\cdot$m or less.

In the following description the term "elongate armour element" when used in the singular should be interpreted to also include the plural meaning of the term, unless it is specifically stated that it means a single elongate armour element.

The terms "section" and "sections" should include both a length of the elongate member as well as a length of the tube formed by the wound elongate member. A section also includes a length of the unbonded flexible pipe.

The unbonded flexible pipe comprises a carcass inside the internal pressure sheath. Outside the internal pressure sheath the unbonded flexible pipe comprises at least one external armour layer. This at least one external armour layer may e.g. comprise one or two pressure armour layers and/or one, two or more tensile armour layers. The pressure armour layer and the tensile armour layer may be manufactured from an electrically conductive material.

The terms "inside" and "outside" a layer, such as e.g. the internal pressure sheath of the pipe is used to designate the relative distance to the axis of the pipe, such that by "inside a layer" is meant the area encircled by the layer i.e. with a shorter radial distance than the layer, and by "outside a layer" is meant the area not encircled by the layer and not contained by the layer, i.e.

with a longer radial distance to the axis of the pipe than the layer. The longitudinal axis of the pipe also defines the center axis of the pipe, i.e. "longitudinal axis" and "center axis" may be used interchangeably.

The first and the second section of the carcass may each have a length from about one meter and up to several kilometer, thus, in an embodiment the length of the first section may be from about 10 m to about 250 m, and the second section may be from about 500 m the about 3000 m. This embodiment may e.g. be used when the first section is above sea level, and does not require much heating, and the second section is in the sea, which has a higher cooling capacity, and more heating of the pipe is required. The length of the unbonded flexible pipes may vary within a rather broad range. The length may vary from about 50 m up to about 5000 m, such as from about 100 m up to about 2500 m, or from about 200 m up to 2000 m.

The longer the unbonded flexible pipe, the higher voltage is required to maintain the same current through the pipe. During operation of the unbonded flexible pipe the electrical potential difference in the electrically conductive layers should be in the range of 0.01 - 5 V/meter pipe. In an embodiment the current is in the range of from 50 Ampere to about 500 Ampere.

When the carcass is used as heating element, the external armour layer may serve as a return path for the current. However, the material used in the sections of the carcass should preferably have a higher electrical resistivity than the electrical resistivity of the external armour layer. Thus, more Joule heating will be generated in the carcass which is in physical contact with the fluid to be heated than in the external armour layer. In an embodiment the metallic and electrically conductive armour layer or layers have specific electrical resistivity of about $10^{-6}$ $\Omega\cdot$m or less.

When the carcass is used as a heating element current is sent through the elongate armour element. The amount of heat generated in the elongate armour element will be evenly distributed in a homogenous conventional carcass along the length of the pipe. In contrast to this, the carcass according to the invention comprises different sections in which the electrical resistance is different, causing different amounts of heat to be generated in the different sections. Thereby, it is possible to design an unbonded flexible pipe system in which sufficient and different amounts of heat are provided in critical sections.

The heat generated in the electrically conductive carcass depends on the resistance R of the material constituting the electrically conductive carcass. In this context the term "resistance R" is meant to cover the electrical resistance of a material when direct current or alternating current is applied.

The direct current I through the circuit comprising the power supply and the electrically conductive carcass can be determined according to the equation:

$$I = V/R$$

where Vis the impressed voltage. For constant I, the higher the resistance R, the more heat will be generated in the material. In general the power dissipation P (Joule heating) can be expressed as:

$$P = I \cdot V = I^2 \cdot R$$

In which P can be seen as a measure for the generated heat.

When the carcass is used as a heating element, direct current or alternating current may be used. The impressed voltage may e.g. be in the range from about 1000 Volt to about 5000 Volt.

Moreover, for the purpose of achieving a satisfactory heating of the electrically conductive layers, the electrical potential difference should be in the range of 0.01 - 5 V/meter pipe.

According to the invention there are several ways of achieving a carcass comprising a first section and a second section along the length of the pipe in which the electrical resistance of the first section is different from the electrical resistance of the second section.

The geometry of the elongate armour element in the first section is different from the geometry of the elongate armour element in the second section. By changing the geometry, it is possible to change the electrical resistance in the elongate armour element.

Alternatively or additionally, the material of the elongate armour element in the first section is different from the material of the elongate armour element in the second section. As a general rule different materials will have different electrical resistance.

In an embodiment of the unbonded flexible pipe the width of the elongate armour element in the first section is different from the width of the elongate armour element in the second section.

In an embodiment the thickness of the elongate armour element in the first section is different from the thickness of the elongate armour element in the second section.

Thus, changing the width and/or the thickness may be used for providing different properties of the carcass in the first and the second section.

The carcass in an unbonded flexible pipe is wound up from an elongate member such as a strip. The elongate member is wound up to form a tube and the winding degree is typically between 85° and 89.8°. Thus, in an embodiment of the present invention the winding degree of the elongate armour element in the first section is different from the winding degree of the elongate armour element in the second section. Having a different winding degree will provide a different length for a current to travel and thereby a different overall electrical resistance between the two sections. The first section may e.g. have a winding degree of between 85° and 87.5° and the second section may e.g. have a winding degree of between 87.6° to 89.8°.

In an embodiment adjacent windings of the elongate armour element are interlocked, and the interlocking of the elongate armour element in the first section is different from the interlocking of the elongate armour element in the second section. The interlocking may e.g. be provided by "S"-shaped profiles.

In an embodiment the elongate armour element in the first section is made from stainless steel, and the elongate armour element in the second section is made from non-stainless steel.

In an embodiment the elongate armour element in the first section is made from stainless steel, and the elongate armour element in the second section is made from titanium.

In an embodiment the elongate armour element in the first section is made from a fully austenitic stainless steel and the elongate armour element in the second section is made from a stainless steel having an austenitic content of from 1% to 90%.

In an embodiment the elongate armour element in the first section is made from duplex steel having a first content of ferritic phase, and the elongate armour element in the second section is made from duplex steel having a second content of ferritic phase, where the first content is different from the second content.

The carcass comprises at least one elongate armour element helically wound to surround the center axis with a winding degree to the longitudinal axis, the elongate armour element is electrically conductive and comprises a plurality of sections wherein the electrical resistances in at least two of the sections are different from each other.

An example not according to the claimed invention may also be realized using several unbonded flexible pipes having different properties with respect to electrical resistance. The unbonded flexible pipes may be assembled by means of end-fittings in which electrical connection is established between the carcasses and optionally other armour layers. The assembled unbonded flexible pipes will appear as a single unbonded flexible pipe having sections with carcasses of different electrical resistance. Consequently, in an example of an unbonded flexible pipe not according to the claimed invention, the sections of different electrical resistance are established by using more unbonded flexible pipes having carcasses of different electrical resistance.

In an embodiment, the interface between different sections comprises an electrically conductive material.

In an embodiment the pipe comprises an insulating layer having a thickness, said thickness varies depending on the electrical resistance of the carcass section. As the electrical resistance has an impact on the generated heat, it is possible to provide an unbonded flexible pipe designed to maximize the heating capacity of the flexible pipe. Moreover, it may be possible to reduce the weight and material consumption of the unbonded flexible pipe.

## DETAILED DESCRIPTION OF THE INVENTION

The invention will be explained in more detail below in connection with a preferred embodiment and with reference to the drawings in which:

Fig. 1 shows and unbonded flexible pipe according to the invention;

Fig. 2 shows a length of an unbonded flexible pipe;

Fig. 3 shows variations in the resistance along the length of the unbonded flexible pipe;

Fig. 4 shows an example with two assembled pipes;

Fig. 5 shows variations in the resistance along the length of the assembled unbonded flexible pipes of fig. 4.

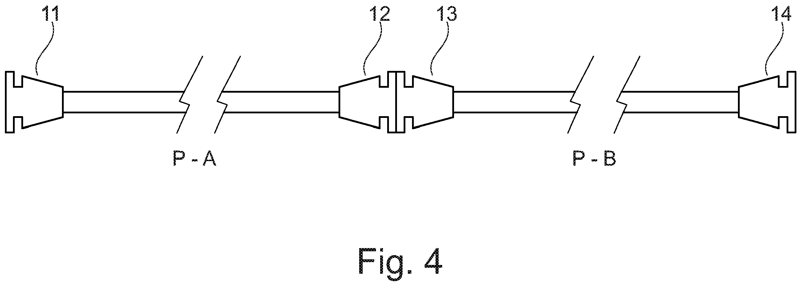

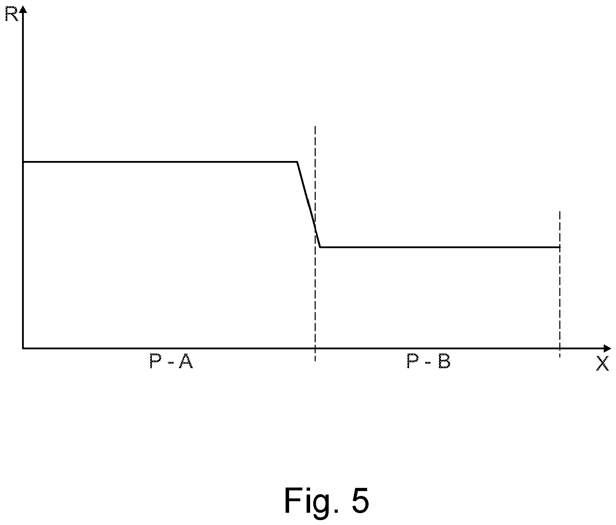

The examples of figures 4 and 5 are not according to the claimed invention.

The drawings are schematic and only intended to illustrate the principles of the invention.

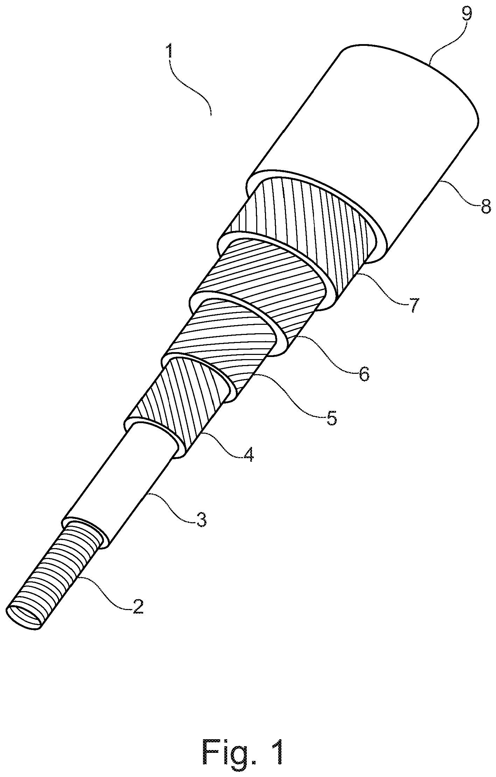

Figure 1 illustrates an unbonded flexible pipe 1 comprising a carcass 2 surrounded by the internal pressure sheath 3. Around the internal pressure sheath are wound a first pressure armour layer 4 and a second pressure armour layer 5. On top of the second pressure armour layer 5 a first tensile armour layer 6 and a second tensile armour layer 7 are placed. The outermost layer is the outer sheath 8.

The carcass 2 is made from an elongate metallic member wound up to form a tube which supports the internal pressure sheath 3. In this embodiment three sections of the elongate metallic member, and thus three sections of the tube, are made from different alloys which have different properties in respect of electrical properties and in particular in respect of electrical resistance. The different sections are assembled by laser welding, which provides an electrically conductive transition between the sections.

The elongate member of the carcass 2 is wound with a degree of approximately 89° in respect of the center axis 9, and forms the inner armour layer, which supports the internal pressure sheath 3. The internal pressure sheath is extruded from HDPE (high density polyethylene).

The pressure armour layers 4 and 5 are made from elongate members of carbon steel and wound with an angle of approximately 85° in respect of the center axis 9. The pressure armour layer 4 and the pressure armour layer 5 are wound in opposite directions in respect of the center axis. The tensile armour layers 6 and 7 are also wound in opposite directions in respect of the center axis 9. The winding angle in respect of the center axis 9 is approximately 35°. The tensile armour layers 6 and 7 are made from carbon steel.

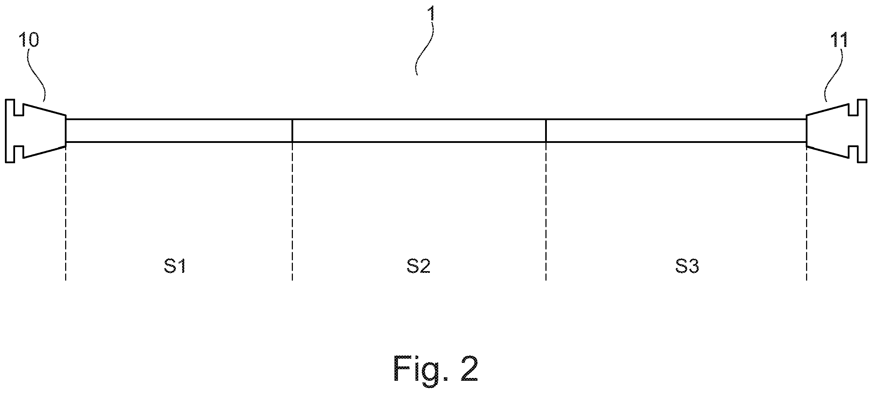

The carcass 2 may be connected with an electric power source via an end-fitting 10 as seen in figure 2. In the end-fitting 11 the carcass 2 is electrically connected to the pressure armour layer 4 which functions as a return path to the end-fitting and the power source for current sent through the carcass 2. The sections S1, S2 and S3 of the unbonded flexible pipe 1 in which the carcass comprises different alloys with different electrical properties are indicated on figure 2. The carcass of section S1 is made from stainless steel AISI202, the carcass of section S2 is made from stainless steel AISI314, and finally the carcass of section S3 is made from duplex steel DUPLEX2205.

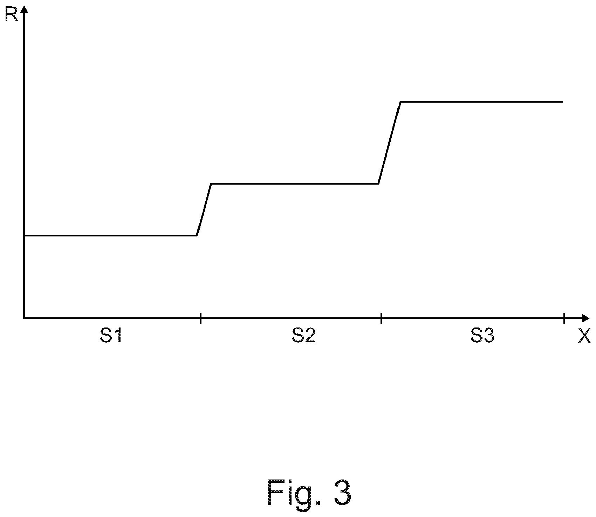

Figure 3 is a curve, which shows how the electrical resistance of the carcass varies along the length of the pipe in the sections S1, S2 and S3. The higher the resistance, the more heat will be generated in the carcass. Thus, most heat will be generated in section 3, S3, and less heat will be generated in the sections 1 and 2, S1 and S2.

Figure 4 illustrates an example in which the different electrical properties in the unbonded flexible pipe are achieved by assembling two unbonded flexible pipes P-A (pipe A) and P-B (pipe B). The two pipes are assembled by means of the two end-fittings 12 and 13 which also provide electrical connections between the carcasses in the two unbonded flexible pipes. The end-fittings 12 and 13 also provide electrical connection between the pressure armour layers in the pipes.

The unbonded flexible pipes P-A and P-B are terminated in end-fittings 11 and 14 which also comprise means for electrical connections.

Figure 5 shows the difference in electrical resistance between the carcasses along the length of the assembled pipes. The pipe P-A has a higher electrical resistance than the pipe P-B. The carcasses in the unbonded flexible pipes PA and P-B are made from stainless steel AISI316, however, the cross-section of the carcass in P-B is bigger than the cross-section of the carcass in P-A. As a result of the difference in cross-sections, the electrical resistance of the carcass in P-B will appear lower than the electrical resistance of the carcass in P-A.

## Claims

1. An unbonded flexible pipe

having two end-fittings (10, 11) and a length between said two end-fittings (10, 11) and a longitudinal axis and comprising, from the inside and out,
a carcass (2),
an internal pressure sheath (3),
at least one external amour layer (4, 5, 6, 7),
and an outer sheath (8),
the carcass (2) comprises at least one elongate armour element helically wound to surround the center axis with a winding degree to the longitudinal axis, wherein the elongate armour element is electrically conductive and the carcass comprises at least a first section and a second section along the length of the pipe between the two end-fittings (10, 11), wherein the geometry and/or the material of the elongate armour element in the first section and the second section are different from each other to provide that the electrical resistance of the first section of the carcass is different from the electrical resistance of the second section of the carcass.

2. An unbonded flexible pipe according to claim1, wherein the width of the elongate armour element in the first section is different from the width of the elongate armour element in the second section.

3. An unbonded flexible pipe according to claim 1 or claim 2, wherein the thickness of the elongate armour element in the first section is different from the thickness of the elongate armour element in the second section.

4. An unbonded flexible pipe according to anyone of the preceding claims, wherein the winding degree of the elongate armour element in the first section is different from the winding degree of the elongate armour element in the second section.

5. An unbonded flexible pipe according to anyone of the preceding claims, wherein adjacent windings of the elongate armour element are interlocked, and the interlocking of the elongate armour element in the first section is different from the interlocking of the elongate armour element in the second section.

6. An unbonded flexible pipe according to anyone of the preceding claims, wherein the elongate armour element in the first section is made from stainless steel and the elongate armour element in the second section is made from non-stainless steel.

7. An unbonded flexible pipe according to anyone of the preceding claims 1 to 5, wherein the elongate armour element in the first section is made from stainless steel and the elongate armour element in the second section is made from titanium.

8. An unbonded flexible pipe according to anyone of the preceding claims 1 to 5, wherein both the first and the second section of the elongate armour element is made from austenitic stainless steel and the elongate armour element in the second section is made from steel having an austenitic content different from the austenitic content of the first section.

9. An unbonded flexible pipe according to anyone of the preceding claims 1 to 5, wherein the elongate armour element in the first section is made from a partly austenitic stainless steel and the elongate armour element in the second section is made from a partly austenitic steel, where the amount of austenitic phase in the first section is different from the amount of austenitic phase the second section.

10. An unbonded flexible pipe according to anyone of the preceding claims, wherein the carcass comprises different sections in which the electrical resistance is different, causing different amounts of heat to be generated in the different sections of the carcass.

11. An unbonded flexible pipe according to anyone of the preceding claims, wherein the pipe carcass (2) comprises said at least one elongate armour element helically wound to surround the center axis with a winding degree to the longitudinal axis, the elongate armour element is electrically conductive and comprises a plurality of sections wherein the electrical resistances in at least two of the sections are different from each other and wherein the interface between different sections of said at least one elongate armour element comprises electrically conductive material.

12. An unbonded pipe according to claim 11, wherein the pipe comprises an insulating layer having a thickness, said thickness varies depending on the electrical resistance of the carcass section.

13. An unbonded flexible pipe according to anyone of the preceding claims, wherein the at least one external armour layer is selected from pressure armour layers (4, 5) and tensile armour layers (6, 7).

**Patentansprüche**

1. Unverbundenes flexibles Rohr

mit zwei Endstücken (10, 11) und einer Länge zwischen den beiden Endstücken (10, 11) und einer Längsachse und umfassend, von innen nach außen,
eine Karkasse (2),
eine Innendruckhülle (3),
mindestens eine äußere Panzerschicht (4, 5, 6, 7),
und eine Außenhülle (8),
wobei die Karkasse (2) mindestens ein längliches Panzerelement umfasst, das schraubenförmig gewickelt ist, um die Mittelachse mit einem Wickelgrad zur Längsachse zu umgeben, wobei das längliche Panzerelement elektrisch leitend ist und die Karkasse mindestens einen ersten Abschnitt und einen zweiten Abschnitt entlang der Länge des Rohrs zwischen den beiden Endstücken (10, 11) umfasst, wobei sich die Geometrie und/oder das Material des länglichen Panzerelements in dem ersten Abschnitt und dem zweiten Abschnitt voneinander unterscheiden, um dafür zu sorgen, dass sich der elektrische Widerstand des ersten Abschnitts der Karkasse von dem elektrischen Widerstand des zweiten Abschnitts der Karkasse unterscheidet.

2. Unverbundenes flexibles Rohr nach Anspruch 1, wobei sich die Breite des länglichen Panzerelements in dem ersten Abschnitt von der Breite des länglichen Panzerelements in dem zweiten Abschnitt unterscheidet.

3. Unverbundenes flexibles Rohr nach Anspruch 1 oder Anspruch 2, wobei sich die Dicke des länglichen Panzerelements in dem ersten Abschnitt von der Dicke des länglichen Panzerelements in dem zweiten Abschnitt unterscheidet.

4. Unverbundenes flexibles Rohr nach einem der vorstehenden Ansprüche, wobei sich der Wickelgrad des länglichen Panzerelements in dem ersten Abschnitt von dem Wickelgrad des länglichen Panzerelements in dem zweiten Abschnitt unterscheidet.

5. Unverbundenes flexibles Rohr nach einem der vorstehenden Ansprüche, wobei benachbarte Wicklungen des länglichen Panzerelements miteinander verriegelt sind und sich die Verriegelung des länglichen Panzerelements in dem ersten Abschnitt von der Verriegelung des länglichen Panzerelements in dem zweiten Abschnitt unterscheidet.

6. Unverbundenes flexibles Rohr nach einem der vorstehenden Ansprüche, wobei das längliche Panzerelement in dem ersten Abschnitt aus Edelstahl besteht und das längliche Panzerelement in dem zweiten Abschnitt aus Nicht-Edelstahl besteht.

7. Unverbundenes flexibles Rohr nach einem der vorstehenden Ansprüche 1 bis 5, wobei das längliche Panzerelement in dem ersten Abschnitt aus Edelstahl besteht und das längliche Panzerelement in dem zweiten Abschnitt aus Titan besteht.

8. Unverbundenes flexibles Rohr nach einem der vorstehenden Ansprüche 1 bis 5, wobei sowohl der erste als auch der zweite Abschnitt des länglichen Panzerelements aus austenitischem Edelstahl besteht und das längliche Panzerelement in dem zweiten Abschnitt aus Stahl mit einem Austenitgehalt besteht, der sich von dem Austenitgehalt des ersten Abschnitts unterscheidet.

9. Unverbundenes flexibles Rohr nach einem der vorstehenden Ansprüche 1 bis 5, wobei das längliche Panzerelement in dem ersten Abschnitt aus einem teilweise austenitischen Edelstahl besteht und das längliche Panzerelement in dem zweiten Abschnitt aus einem teilweise austenitischen Stahl besteht, wobei sich der Anteil der austenitischen Phase in dem ersten Abschnitt von dem Anteil der austenitischen Phase in dem zweiten Abschnitt unterscheidet.

10. Unverbundenes flexibles Rohr nach einem der vorstehenden Ansprüche, wobei die Karkasse unterschiedliche Abschnitte umfasst, in denen sich der elektrische Widerstand unterscheidet, wodurch in den unterschiedlichen Abschnitten der Karkasse unterschiedliche Wärmemengen erzeugt werden.

11. Unverbundenes flexibles Rohr nach einem der vorstehenden Ansprüche, wobei die Rohrkarkasse (2) das mindestens eine längliche Panzerelement umfasst, das schraubenförmig gewickelt ist, um die Mittelachse mit einem Wickelgrad zur Längsachse zu umgeben, wobei das längliche Panzerelement elektrisch leitend ist und eine Vielzahl von Abschnitten umfasst, wobei sich die elektrischen Widerstände in mindestens zwei der Abschnitte voneinander unterscheiden und wobei die Schnittstelle zwischen unterschiedlichen Abschnitten des mindestens einen länglichen Panzerelements elektrisch leitendes Material umfasst.

12. Unverbundenes flexibles Rohr nach Anspruch 11, wobei das Rohr eine Isolierschicht mit einer Dicke umfasst, wobei die Dicke in Abhängigkeit von dem elektrischen Widerstand des Karkassenabschnitts variiert.

13. Unverbundenes flexibles Rohr nach einem der vorstehenden Ansprüche, wobei die mindestens eine äußere Panzerschicht aus Druckpanzerschichten (4, 5) und Zugpanzerschichten (6, 7) ausgewählt ist.

**Revendications**

1. Tuyau flexible non collé

comportant deux embouts (10, 11), une longueur entre lesdits deux embouts (10, 11), un axe longitudinal et comprenant, de l'intérieur vers l'extérieur,
une carcasse (2),
une gaine de pression interne (3),
au moins une couche d'armure externe (4, 5, 6, 7),
et une gaine externe (8),
la carcasse (2) comprend au moins un élément d'armure allongé enroulé en enroulement hélicoïdal de manière à entourer l'axe central avec un degré d'enroulement par rapport à l'axe longitudinal, dans lequel l'élément d'armure allongé est conducteur électrique et la carcasse comprend au moins un premier segment et un deuxième segment le long de la longueur du tuyau entre les deux embouts (10, 11), dans lequel la géométrie et/ou le matériau de l'élément d'armure allongé dans le premier segment et le second segment est/sont différent(e)(s) l'un(e) de l'autre afin de faire en sorte que la résistance électrique du premier segment de la carcasse soit différente de la résistance électrique du deuxième segment de la carcasse.

2. Tuyau flexible non collé selon la revendication 1, dans lequel la largeur de l'élément d'armure allongé dans le premier segment est différente de la largeur de l'élément d'armure allongé dans le deuxième segment.

3. Tuyau flexible non collé selon la revendication 1 ou la revendication 2, dans lequel l'épaisseur de l'élément d'armure allongé dans le premier segment est différente de l'épaisseur de l'élément d'armure allongé dans le deuxième segment.

4. Tuyau flexible non collé selon l'une quelconque des revendications précédentes, dans lequel le degré d'enroulement de l'élément d'armure allongé dans le premier segment est différent du degré d'enroulement de l'élément d'armure allongé dans le deuxième segment.

5. Tuyau flexible non collé selon l'une quelconque des revendications précédentes, dans lequel les enroulements adjacents de l'élément d'armure allongé sont emboîtés, et l'emboîtement de l'élément d'armure allongé dans le premier segment est différent de l'emboîtement de l'élément d'armure allongé dans le deuxième segment.

6. Tuyau flexible non collé selon l'une quelconque des revendications précédentes, dans lequel l'élément d'armure allongé dans le premier segment est constitué d'acier inoxydable et l'élément d'armure allongé dans le deuxième segment est constitué d'acier non inoxydable.

7. Tuyau flexible non collé selon l'une quelconque des revendications précédentes 1 à 5, dans lequel l'élément d'armure allongé dans le premier segment est constitué d'acier inoxydable et l'élément d'armure allongé dans le deuxième segment est constitué de titane.

8. Tuyau flexible non collé selon l'une quelconque des revendications précédentes 1 à 5, dans lequel à la fois les premier et deuxième segments de l'élément d'armure allongé sont constitués d'acier inoxydable austénitique et l'élément d'armure allongé dans le deuxième segment est constitué d'acier ayant une teneur en austénite différente de la teneur en austénite du premier segment.

9. Tuyau flexible non collé selon l'une quelconque des revendications précédentes 1 à 5, dans lequel l'élément d'armure allongé dans le premier segment est constitué d'un acier inoxydable partiellement austénitique et l'élément d'armure allongé enroulé dans le deuxième segment est constitué d'un acier inoxydable partiellement austénitique, la quantité de phase austénitique dans le premier segment étant différente de la quantité de phase austénitique dans le deuxième segment.

10. Tuyau flexible non collé selon l'une quelconque des revendications précédentes, dans lequel la carcasse comprend différents segments dans lesquels la résistance électrique est différente, ce qui entraîne la production de différentes quantités de chaleur dans les différents segments de la carcasse.

11. Tuyau flexible non collé selon l'une quelconque des revendications précédentes, dans lequel la carcasse (2) du tuyau comprend ledit au moins un élément d'armure enroulé en enroulement hélicoïdal pour entourer l'axe central avec un degré d'enroulement par rapport à l'axe longitudinal, l'élément d'armure allongé est conducteur électrique et comprend une pluralité de segments dans lesquels les résistances électriques dans au moins deux des segments sont différentes l'une de l'autre et dans lesquels l'interface entre différents segments dudit au moins un élément d'armure allongé comprend du matériau conducteur électrique.

12. Tuyau non collé selon la revendication 11, dans lequel le tuyau comprend une couche isolante ayant une épaisseur, ladite épaisseur variant en fonction de la résistance électrique du segment de carcasse.

13. Tuyau flexible non collé selon l'une quelconque des revendications précédentes, dans lequel ladite au moins une couche d'armure externe est choisie parmi des couches d'armure de pression (4, 5) et des couches d'armure de traction (6, 7).

Fig. 1

Fig. 2

Fig. 3

Fig. 4

11    12  13    14

P - A              P - B

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015014365 A

**Non-patent literature cited in the description**

- Recommended Practice for Flexible Pipe. ANSI/API 17 B. July 2008

- Specification for Unbonded Flexible Pipe. ANSI/API 17J. July 2008